# EUROPEAN PATENT SPECIFICATION

(11) **EP 4 145 988 B1**
(45) Date of publication and mention of the grant of the patent: **05.06.2024**
(21) Application number: 21723932.6
(22) Date of filing: 22.04.2021
(51) Int. Cl.: A01K 5/00

(54) **AUTONOMOUS VEHICLE, FEEDING SYSTEM, AND METHOD FOR FEEDING ANIMALS**
AUTONOMES FAHRZEUG, FÜTTERUNGSSYSTEM UND VERFAHREN ZUM FÜTTERN VON TIEREN
VÉHICULE AUTONOME, SYSTÈME D'ALIMENTATION ET PROCÉDÉ D'ALIMENTATION D'ANIMAUX

(30) Priority: 04.05.2020 NL 2025498
(43) Date of publication of application: 15.03.2023
(73) Proprietor: Lely Patent N.V., 3147 PB Maassluis (NL)
(72) Inventor: STEENEVELD, Herman, 3147 PB Maassluis (NL)
(74) Representative: Octrooibureau Van der Lely N.V.
(86) International application number: PCT/NL2021/050263
(87) International publication number: WO 2021/225434

(56) References cited:
- CN-U- 204 891 677
- US-A1- 2010 326 363
- US-A1- 2019 021 278

## Description

The present invention relates to an autonomous vehicle for use in feeding animals, in particular cows, such as dairy cows or beef cows, wherein the vehicle comprises a frame, in particular an undercarriage, displacement means for moving the frame, a container arranged on the frame for holding animal feed, and with a dispensing opening for dispensing the held animal feed from the container, a rotatable auger arranged in the container for mixing and/or chopping the held animal feed, an auger drive for rotating the auger, with a three-phase motor, and with a frequency controller or variable-frequency drive (VFD) for controlling the three-phase motor, in particular for setting a motor speed of the three-phase motor, wherein the three-phase motor is connectable, in particular via the frequency controller, to a three-phase power supply network (400 V), a battery power supply for the three-phase motor, which is configured to be charged by means of the three-phase power supply network, a sensor, which is configured to determine a signal that is related to the amount of animal feed in the container, and a control system for controlling the frequency controller, wherein the control system is connected to the sensor in order to receive the signal from the sensor.

Such an autonomous vehicle for feeding is known in the prior art. The Lely Vector^{®} system is thus known, with an autonomously driving mixing and feeding robot with a mixing auger in a container for holding a batch of animal feed, and feed dosing means for dispensing animal feed from the container.

Although the known autonomous feeding device mostly works adequately, it is not always fully able to remove the leftover feed from the auger and/or from the container at the end of feeding, in particular when the animal feed is sticky. This is undesirable because the composition of the leftover feed that remains on the auger may be different from the composition of a subsequent batch of feed that is to be loaded into the container. The composition of this subsequent batch of feed is then less accurate.

US 2019/021278 A1 discloses an autonomous vehicle according to the preamble of claim 1, and livestock feeding system with a feed preparation area containing at least one storage, a livestock stable which is connected via driving routes to the feed preparation area, and a robot which comprises a variable speed electric drive controllable by a frequency transformer and a battery.

The present invention aims to improve the known device so that the autonomous vehicle is better able to remove the leftover feed without worsening, in particular even while improving, the other functionalities such as adequate mixing and/or chopping of the animal feed in the container.

Another aim of the present invention is to provide an autonomous vehicle for mixing and dispensing animal feed that is flexibly employable with respect to the power supply.

The invention achieves this aim with a vehicle according to Claim 1, in particular an autonomous vehicle for use in feeding animals, in particular cows, such as dairy cows or beef cows, wherein the vehicle comprises a frame, in particular an undercarriage, displacement means for moving the frame, a container arranged on the frame for holding animal feed, and with a dispensing opening for dispensing the held animal feed from the container, a rotatable auger arranged in the container for mixing and/or chopping the held animal feed, an auger drive for rotating the auger, with a three-phase motor, in particular a 230 V/400 V three-phase motor, and with a frequency controller or variable-frequency drive (VFD) for controlling the three-phase motor, in particular for setting a motor speed of the three-phase motor, wherein the three-phase motor is connectable, in particular via the frequency controller, to a three-phase power supply network (400 V), a battery power supply for the three-phase motor, which is configured to be charged by means of the three-phase power supply network, a sensor, which is configured to determine a signal that is related to the amount of animal feed in the container, and a control system for controlling the frequency controller and/or the three-phase motor, wherein the control system is connected to the sensor in order to receive the signal from the sensor, and wherein the three-phase motor is connected to the frequency controller via a first relay group so as to be connectable in star configuration, and is connected to the frequency controller via a second relay group so as to be connectable in delta configuration, and wherein the control system is configured to switch the first and second relay group so that the three-phase motor is connected to the frequency controller in star configuration when the three-phase motor is connected, in particular via the frequency controller, to the three-phase power supply network in order to mix and/or chop held animal feed, and is further configured, in the case when the three-phase motor is supplied with power by the battery power supply without being connected to the three-phase power supply network and the control system gives an "empty" indicator on the basis of the signal received from the sensor, to switch the first and second relay group so that the three-phase motor is connected to the frequency controller in delta configuration, in particular in order to increase the maximum motor speed with which the torque for rotating the auger can be delivered and/or to increase the auger speed in order to remove leftover feed from the auger and/or from the container.

This vehicle can be connected to a three-phase power supply network, and can therefore use (maximum) 400 V AC voltage as power supply. The three-phase motor has three coils. The 400 V AC voltage is converted into 560 V DC voltage for the frequency controller. The frequency controller subsequently converts this DC voltage into a variable three-phase voltage for the three-phase motor, which may be between 0 and 400 V. In other words, the frequency controller adjusts the voltage as required to the right voltage for the coils of the three-phase motor. The value of this voltage is dependent on the set frequency. For operation on the 400 V power supply network (400 V three-phase power supply) the three-phase motor is connected in star configuration, so that, in principle, the maximum voltage (400 V/^3 = 230 V) is seen on the coils. When the three-phase motor is connected to a 400 V three-phase power supply, the vehicle can thus operate at high power and torque, notably in order to be able to chop and/or mix feed, such as relatively long-stemmed silage.

Once the feed has been chopped and/or mixed, the 400 V three-phase power supply network is disconnected, and just the battery power supply of the vehicle remains available. This delivers 48 V DC voltage for example, which can be converted into a DC voltage of 325 V for the frequency controller. The frequency controller is configured to deliver a variable three-phase voltage of between 0 and 230 V to the three-phase motor. Normally, a motor would be connected in delta configuration with such an AC voltage. However, the three-phase motor is unable to deliver sufficient torque in delta configuration, because the maximum current is limited by the frequency controller, unless a larger frequency controller is chosen which requires more installation space than is desirable or available. The three-phase motor is located in a central, tubular motor housing, which is arranged in the container of the vehicle. To optimize the capacity of the container and guarantee mixing quality, it is desirable for the diameter of this motor housing to be kept as small as possible. Therefore, the control system according to the invention is configured to leave the three-phase motor in star configuration, so that, at a low speed, a higher torque can be delivered, in particular in order to start the auger up from standstill in a container filled with animal feed and to start distributing the animal feed. In this case the speed is lower, but still sufficient to be able to dispense the animal feed.

However, at the end of distributing feed, the auger, especially the bottommost flatter portion thereof, has to be cleared of leftover feed, and the speed of the auger has to be increased substantially, for example from about 20 to 25 rpm to about 50 rpm. Of course, these numbers depend on the dimensions, in particular the cross section, of the auger. When attempting to set this speed by means of the frequency controller with the three-phase motor in star configuration, there arises the problem that the lower coil voltage leads to a lower speed with which the nominal torque is delivered. As the speed increases the torque decreases, and it will not be sufficiently high at the required speed. The desired speed for cleaning is much higher than the nominal speed, therefore meaning that the three-phase motor would no longer be able to deliver the required torque. In short, with the three-phase motor in star configuration, the speed for cleaning the auger is not reached.

According to the invention, the three-phase motor will now be connected in delta configuration. The motor can then rotate faster, fast enough to be able to generate the required speed of rotation. At the same time, the delivered torque is lower, but it is still sufficient to rotate the auger in the near-empty container. As a result, the vehicle is well able to remove the remaining animal feed, without the other functionalities, such as adequate mixing and/or chopping of the animal feed in the container, being negatively affected, with only limited installation space being required for the three-phase motor and frequency controller for this.

It is explicitly noted here that the known star/delta configuration, intended for starting up large electric motors, is different. On the one hand, the aim is different: namely, it is that of preventing large inrush currents from standstill, and on the other hand, the control is completely different: namely, it comprises starting up from standstill in star configuration, and subsequently, once a timer has elapsed or upon reaching a certain speed, switching to delta configuration, and then speeding up further until reaching operating speed. In the case of the present invention, while there is also a switch from star to delta, this does not take place when speeding up in one and the same operation, but only when moving to another operating state, or functionality, namely that of cleaning by rotation instead of mixing/chopping/dosing. The control for switching from star to delta is therefore not based on a timer or a speed, but based on a signal that is related to the amount of animal feed in the container. Furthermore, in practice, it is in principle necessary, after mixing and dispensing the feed, to first stop the three-phase motor, to change the settings for the frequency controller and to have the two relay groups switch from star to delta, and then to start the three-phase motor back up from standstill. Because in this case the switching effect is in practice already effectively suppressed by the frequency controller which is present, a star/delta switch is not needed for that purpose. It is therefore clear that the aim of the present invention is different.

It is further noted that a feed-mixing wagon is known from EP1721520, in which the augers are driven by a drive shaft, which is driven by a combustion engine of a tractor via an automatic gearbox with a plurality of gears. A weighing sensor measures the weight of the feed in the container. The measured weight is compared with a threshold value for a higher gear. When the measured weight falls below this threshold value, the gearbox changes automatically to a higher gear. However, this feed-mixing wagon does not have an electric motor that is switched between star and delta. Instead of driving the output shaft of the motor faster in order to increase the auger speed, the transmission ratio of the automatic gearbox is changed. This amounts to an entirely different solution.

In an embodiment according to the invention, the control system is configured, in the case when the three-phase motor is disconnected from the three-phase power supply network after mixing and/or chopping held animal feed, to temporarily switch off the three-phase motor, and the control system is further configured, at a later point in time with animal feed held in the container, to start the three-phase motor back up while the three-phase motor is/stays connected to the frequency controller in star configuration, in particular by means of the still correspondingly switched first and second relay group, in order to dispense held animal feed from the container via the dispensing opening, wherein the control system is further configured, in the case when subsequently, after dispensing the held animal feed, the control system gives the "empty" indicator on the basis of the signal received from the sensor, to switch the first and second relay group from star to delta so that the three-phase motor is connected to the frequency controller in delta configuration, in particular in order to increase the maximum motor speed with which the torque for rotating the auger can be delivered and/or to increase the auger speed. As a result, the relatively small three-phase motor has a relatively high torque and low speed when starting up the auger in the container filled with animal feed, i.e. with the three-phase motor still in star configuration, while after switching to delta configuration, the three-phase motor can reach sufficient rotational speed to remove leftover feed from the auger by centrifugal effect. In other words, the desired functionality is achieved with a relatively small and inexpensive three-phase motor and relatively compact frequency controller.

In an embodiment according to the invention, the control system is configured, in the case when the control system does not give the "empty" indicator on the basis of the signal received from the sensor, to switch the first and second relay group so that the three-phase motor is connected to the frequency controller in star configuration. If the three-phase motor were connected in delta configuration to operate on the 400 V three-phase power supply network, in which case the frequency controller adjusts the voltage on the coils down to a correct, usable voltage, in which case it is even possible to momentarily overload the motor, i.e. to apply a coil voltage of more than 230 V to the coils, then, when starting up, or when there is a lot of resistance, such as when chopping an amount of relatively long-stemmed silage that has just been added, there would not be enough power available to deliver the required torque in order to operate properly. Consequently, according to the invention, the three-phase motor is connected in star configuration if the container is not "empty", so that, in principle, the maximum nominal voltage (400 V/^3 = 230 V) can be present on the coils, and more torque is generated for the same power. In the state when connected to the 400 V three-phase power supply network, the vehicle can then operate at high power and torque. Once the feed has been chopped and/or mixed, the 400 V three-phase power supply network is disconnected, and then just the battery power supply is available. This delivers 48 V DC voltage for example, and can deliver, after conversion/inversion, an AC voltage with variable frequency and a variable three-phase voltage from 0 V to at most 230 V. The control system is configured to leave the three-phase motor in star configuration in this case, so that a relatively high torque can be exerted on the auger in order to set the auger in motion from standstill in the container filled with animal feed. Only when the container is "empty", in particular when no or hardly any animal feed is being dispensed from the container, for example because remaining animal feed is stuck to the auger, the three-phase motor is switched from star to delta, so that the three-phase motor can drive the auger to a sufficiently high speed to clean the auger by rotation.

In an embodiment, the auger drive is configured to rotate the auger by means of the three-phase motor which is connected to the frequency controller in star configuration when chopping and/or mixing at a maximum auger speed of RPMₘₐₓ, wherein the auger drive is configured to increase the maximum auger speed to at least 2RPMₘₐₓ when the three-phase motor is connected to the frequency controller in delta configuration. Such an increase in the auger speed is sufficient to practically completely remove the remaining amount of feed.

In a preferred embodiment, the frame comprises an undercarriage with wheels, wherein the vehicle is provided with navigation means that are connected to the control system in order to autonomously drive the vehicle over a surface, such as a floor in an animal shed or yard of a farm. A basic example of such a vehicle is a vehicle such as the mixing and feeding robot of the Lely-Vector^{®} system, which then has to be modified according to the present invention, i.e. the power supply cable to the three-phase motor now comprises, according to the invention, six wires instead of three wires, which are connected to the first and second relay groups added for the invention via connection terminals, and the software of the control system is adapted to operate the relay groups according to the invention. The advantages have already been described above.

In an embodiment according to the invention, the displacement means comprise a rail system, on which rail system the frame is arranged, and along which rail system the frame is movably arranged. Instead of an autonomous vehicle that is freely movable over a surface, such as a floor, the vehicle is then guided by the rail system. It is also possible for such a system, in which the frame with the container is, for example, suspended from a rail system or drivable on a rail system, to achieve the same advantages according to the invention. Due to the rail system, the navigation means are then limited to a measurement of the position along the rails or of the covered distance, for example.

In an embodiment according to the invention, the sensor comprises a weighing sensor, which is configured to determine a weight of animal feed held in the container. In this case, the signal from the weighing sensor forms the signal that is related to the amount of animal feed in the container. In particular, the control system is configured to determine a variable that is representative of the decrease in the weight of animal feed held in the container, in particular when dispensing same from the container, and to give the "empty" indicator in the case when the control system determines, on the basis of this variable, that this decrease in the weight is substantially no longer or hardly changing with time, i.e. for example has become equal to or fallen below a threshold value, for example as an amount of feed (kg) or a percentage (%), in particular over a predetermined period. The threshold value may be 0 or almost 0. In the case when the signal from the weighing sensor indicates that the weight is no longer or hardly decreasing for a predetermined period, the control system gives the "empty" indicator, although there may still be a remaining amount of feed in the container, for example because feed is stuck to the auger. In this particular embodiment, the measured weight is tracked over time. Then, once the measured weight has stopped, or practically stopped, changing, the control system switches the three-phase motor from star to delta in order to allow the output shaft to rotate faster. This affords a significant advantage with respect to the comparison of the measured weight with a threshold value as known from document EP1721520 cited above. Suppose that the threshold value is 30 kg and the auger will rotate faster once the measured weight has fallen below this threshold value. Sometimes, it would then be possible to distribute (some of) this 30 kg of feed at the feeding fence while still in star configuration. In other cases, the feed is sticky, for example, resulting in the measured weight never falling below 50 kg. In that case, the auger would never be sped up. With this particular embodiment, the change in the measured weight is therefore observed in order to allow the control system to give the "empty" indicator. Incidentally, instead of a weighing sensor, a camera may also be used, for example. In this case, image recognition may be used to determine when the signal that is related to the amount of feed in the container is no longer or hardly changing and the control system may give the "empty" indicator.

In an embodiment according to the invention, the three-phase motor comprises an output shaft, wherein the auger drive comprises a transmission device with a fixed transmission ratio, in particular a gearbox, with an input shaft that is connected to the output shaft of the three-phase motor, and with an output shaft that is connected to the auger. The transmission device decreases the speed of the three-phase motor to the desired speed of the auger. The transmission ratio is constant, so that the gearbox is robust and durable.

In a further embodiment according to the invention, the control system is configured to disconnect the battery power supply from the three-phase motor when the three-phase motor is connected, in particular via the frequency controller, to the three-phase power supply network. While the three-phase motor is connected to the three-phase power supply network in order to mix and/or chop the animal feed in the container and the battery power supply is being charged from the three-phase power supply network via one or more battery chargers, the battery power supply is disconnected from the three-phase motor by the control system. The control system controls the battery power supply so as to supply the three-phase motor with power only once the three-phase power supply network has been disconnected from the three-phase motor. This guarantees reliable operation.

The invention also relates to a feeding system for automatically, in particular fully automatically, feeding animals, in particular cows, such as dairy cows or beef cows, with animal feed at at least one feeding place, wherein the feeding system comprises a vehicle as described above. The feeding system may then comprise a charging device, in particular a charging station, that is configured to be connected to a three-phase power supply network (400 V), wherein the vehicle is provided with a connecting device that is configured to be connected to the charging device in order to charge the battery power supply of the vehicle and in order to supply, in particular via the frequency controller, the three-phase motor with power when mixing and/or chopping held animal feed.

According to the invention, it is further possible for the feeding system to be provided with a feeding fence, in particular in an animal shed space for holding animals, and a feeding alley that extends along the feeding fence, in particular on the side of the feeding fence opposite the animal shed space, and wherein the vehicle is configured to autonomously drive through the feeding alley and to dispense animal feed along the feeding fence.

The invention also relates to a method for automatically feeding animals, in particular cows, such as dairy cows or beef cows, by means of a vehicle as described above. This method affords the same advantages as described above for the autonomous vehicle.

The invention will be explained below by means of an exemplary embodiment shown in the figures.

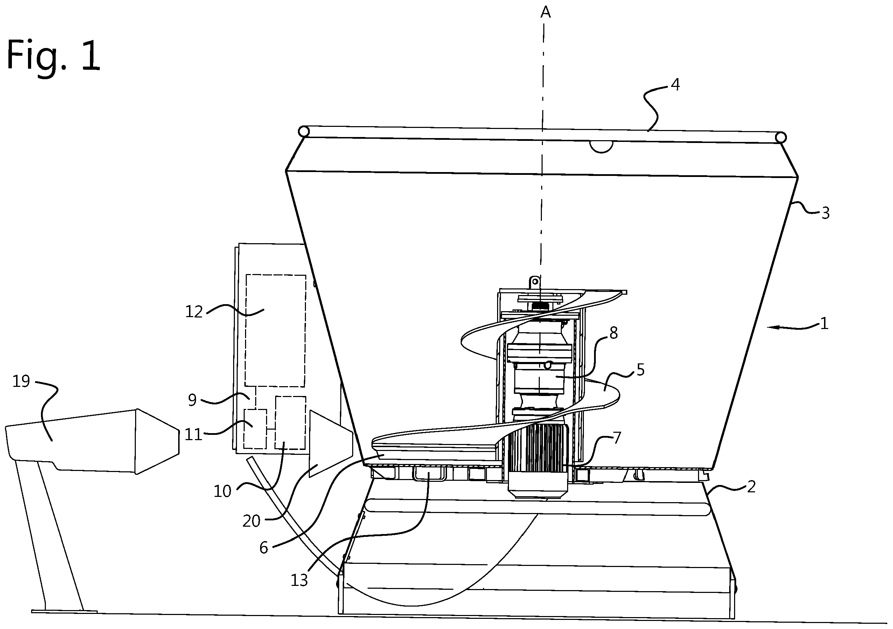

Figure 1 schematically shows a side view of a feeding system with an autonomous vehicle according to the invention.
Figure 2 shows a simplified circuit diagram for the vehicle shown in Figure 1.

The feeding system comprises a vehicle 1, which is provided with a frame or undercarriage 2 on which is arranged a container 3 with a filling opening 4 for animal feed with which it is to be filled. Located within the container 3 is an auger 5 with a bottommost, flatter portion 6, which extends with only a small angle with respect to the horizontal. The auger 5 is rotatable about an axis of rotation A. Reference numeral 9 denotes an interior of a switch box, provided with a frequency controller or variable-frequency drive (VFD) 11. Reference numeral 12 denotes a control system, and reference numeral 13 denotes a weighing sensor.

The vehicle comprises a battery power supply 10. Although the battery power supply 10 is schematically illustrated in the switch box, the battery power supply 10 is in practice, for example, arranged on the undercarriage 2 beneath the container 3. The battery power supply 10 can be connected to a charging device 19, in this exemplary embodiment a charging station, by means of a connecting device 20. The charging device 19 is connected to a three-phase power supply network (400 V), i.e. when the vehicle 1 is connected to the charging device 19 by means of the connecting device 20, the battery power supply 10 is charged by means of battery chargers and 400 V from the three-phase power supply network is available.

The vehicle 1 is an autonomously driveable vehicle for feeding animals such as dairy cattle. The undercarriage 2 is provided with displacement means (not shown separately here), for example in the form of wheels or caterpillar tracks. The displacement means are driveable using one or more motors, thereby allowing the vehicle 1 to move. Furthermore, navigation means may be provided, which may be connected to the control system 12, for autonomous navigation.

The container 3 is configured to be filled with animal feed via the filling opening 4. This happens from a feed kitchen or silo, for example. The animal feed may comprise, for example, silage, grass, hay, silage maize, etc. The animal feed needs to be chopped in many cases, and to be mixed in virtually all cases. The auger 5 is provided for that purpose, on which one or more blades (not shown in any more detail) are arranged if required. The flatter portion 6 of the auger 5 ensures that the food in the container 3 is picked up in an optimal manner, while guaranteeing that no, or at least little, feed remains between the auger 5 and the bottom of the container 3. However, the flatter nature of this portion 6 means that feed may remain on it. The container 3 further comprises means for dispensing the chopped and/or mixed animal feed, such as an openable and closable door or other opening, and optionally a discharge roller, discharge conveyor or the like. By rotating the auger 5, the animal feed can be dispensed via the corresponding opening, for example via the discharge conveyor, or just by driving along the feeding fence or the like.

The weighing sensor 13, which is configured to determine the weight of the animal feed in the container 3, may in this case serve to determine whether the container 3 is practically "empty", for example because the measured weight is no longer decreasing. When the measured weight remains substantially constant, at least decreasing by less than a predetermined amount or percentage, for at least a predetermined time, the control system 12 which is operationally connected to the weighing sensor 13 determines that the container 3 is "empty". The control system 12 then gives the "empty" indicator, i.e. a signal that is related to the "empty" state of the container 3. Of course, the weighing sensor 13 may also serve to weigh the animal feed on introduction into the container 3, so that the ration can be determined accurately.

The auger 5 is driven using an auger drive, which comprises an auger motor 7 in the form of a three-phase motor, and a transmission device 8. The latter has, for example, a fixed transmission ratio of 80:1 or 75:1, and serves to make the auger 5 rotate about the axis of rotation A at a lower speed than the motor, and with a correspondingly higher torque, in order to be able to chop and/or mix.

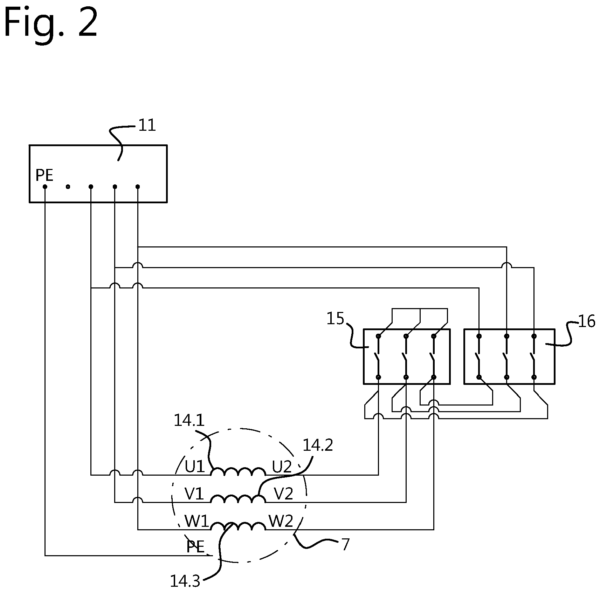

The control of the three-phase motor 7 will now be explained with the aid of Figure 2.

The three-phase motor 7 is an electric motor, in particular a 230 V/400 V three-phase motor, with three coils 14-1, 14-2 and 14-3, which are connectable to the frequency controller 11 by means of a first relay group 15 and a second relay group 16. In the case when the first relay group 15 is closed and the second relay group 16 is open, then the coils 14-1, 14-2, 14-3 of the motor 7 are in star configuration, and in the case when the first relay group 15 is open and the second relay group 16 is closed, then the coils 14-1, 14-2, 14-3 are in delta configuration.

For example, the nominal specifications of the motor 7 are 5.5 kW and 1500 rpm at 50 Hz and 230 V coil voltage. The frequency controller 11 is sized for 400 V and for 7.5 kW. Of course, other numbers are also possible in both cases. When the motor 7 is running at 1500 rpm nominal, the auger rotates at 20 rpm nominal, for example. In principle, this is possible both in star and in delta configuration. The situation of the delta configuration and the connection to the three-phase power supply network (400 V) is now considered. The frequency controller could then adjust the voltage down (in principle) to 230 V nominal coil voltage, at 50 Hz, i.e. 1500 rpm. In the event of (heavy) loading, the frequency controller 11 may overload the motor 7 for a certain time. However, in many cases the torque will be insufficient for cutting through a large amount of silage loaded into the container, or to rotate the auger from standstill, because the frequency controller 11 is limited in current, and cannot then deliver the corresponding current.

According to the invention, to be able to operate with the same, still compact frequency controller while obtaining a higher torque, the motor 7 is connected in star configuration by actuating the first and second relay groups 15 and 16 in such a way that the first relay group 15 is closed and the second relay group 16 is open. A significantly higher torque is now generated for the same motor current. Therefore, the vehicle 1 is in principle operated with the motor 7 in star configuration. When the vehicle is disconnected from the 400 V three-phase power supply network and switches to battery operation, which delivers maximum 230 V three-phase voltage (in order to avoid the battery system coming under a higher safety and insulation class), the motor 7 is also in star configuration, and still delivers, despite the now lower maximum coil voltage of in principle 230A/3 = 132 V nominal, the same torque at a lower speed (lower frequency) in order to be able to dispense the mixed feed.

In the case when the animal feed has been virtually completely dispensed, and the container 3 is therefore "empty", i.e. the control system determines, from the indication given by the weighing sensor 13 that the decrease in weight is no longer or hardly changing, the auger 5 in particular, and more particularly the bottommost flatter portion 6, still has to be cleaned, i.e. to be cleared of animal feed on and/or stuck to it. For this, the auger 5 has to be rotated at a much higher speed, so that the remaining animal feed is removed by centrifugal effect. In practice, a speed of, or example, two to three times as high is found to be effective, which in the present case is thus about 50 rpm. Of course, this speed is dependent on the dimensions of the auger, and even on the type of animal feed.

To reach this speed, the frequency controller has to generate a correspondingly higher frequency. In this case approximately 120 Hz instead of 50 Hz nominal, for example. At such a frequency, the corresponding speed of rotation of the motor, which is then at close to 4000 rpm for example, and the resulting impedance properties of the coils, the coil voltage of the motor in star configuration is too low to still be able to deliver the torque required for rotation. The control system 12 then switches the first and second relay groups 15 and 16, so that the motor 7 is in delta configuration. The maximum coil voltage is now higher, namely 230 V instead of 132 V, and as a result the motor can deliver enough torque to rotate, and, with the set speed of rotation, to clean the auger 5 by rotation.

A compact auger motor and frequency controller are thus provided which can deliver both a high torque (at low speed) for chopping and mixing, and a high speed (with low torque) for cleaning the auger. Both the motor and the frequency controller are suitable for operating on a 400 V three-phase power supply network and a battery power supply, which can be converted into a three-phase voltage between 0 and maximum 230 V.

The described and illustrated embodiments are by no means intended to be limiting; rather, they serve only to illustrate the invention. The scope of protection is determined by the attached claims.

## Claims

1. Autonomous vehicle (1) for use in feeding animals, in particular cows, such as dairy cows or beef cows, wherein the vehicle comprises:
- a frame (2), in particular an undercarriage,
- displacement means for moving the frame (2),
- a container (3) arranged on the frame for holding animal feed, and with a dispensing opening for dispensing the held animal feed from the container (3),
- a rotatable auger (5) arranged in the container for mixing and/or chopping the held animal feed,
- an auger drive for rotating the auger (5), with a three-phase motor (7), and with a frequency controller (11) for controlling the three-phase motor (7), in particular for setting a motor speed of the three-phase motor (7), wherein the three-phase motor (7) is connectable, in particular via the frequency controller (11), to a three-phase power supply network (400 V),
- a battery power supply (10) for the three-phase motor (7), which is configured to be charged by means of the three-phase power supply network,
- a sensor (13), which is configured to determine a signal that is related to the amount of animal feed in the container (3), and
- a control system (12) for controlling the frequency controller (11), wherein the control system (12) is connected to the sensor (13) in order to receive the signal from the sensor (13),
**characterized in that** the three-phase motor (7) is connected to the frequency controller (11) via a first relay group (15) so as to be connectable in star configuration, and is connected to the frequency controller (11) via a second relay group (16) so as to be connectable in delta configuration, and the control system (12) is configured to switch the first and second relay group (15, 16) so that the three-phase motor (7) is connected to the frequency controller (11) in star configuration when the three-phase motor (7) is connected, in particular via the frequency controller (11), to the three-phase power supply network in order to mix and/or chop held animal feed, and is further configured, in the case when the three-phase motor (7) is supplied with power by the battery power supply (10) without being connected to the three-phase power supply network and the control system (12) gives an "empty" indicator on the basis of the signal received from the sensor (13), to switch the first and second relay group (15, 16) so that the three-phase motor (7) is connected to the frequency controller (11) in delta configuration, in particular in order to increase the maximum motor speed with which the torque for rotating the auger can be delivered.

2. Vehicle according to Claim 1, wherein the control system (12) is configured, in the case when the three-phase motor (7) is disconnected from the three-phase power supply network after mixing and/or chopping held animal feed, to temporarily switch off the three-phase motor (7), and the control system (12) is further configured, at a later point in time with animal feed held in the container (3), to start the three-phase motor (7) back up while the three-phase motor (7) is connected to the frequency controller (11) in star configuration in order to dispense held animal feed from the container (3) via the dispensing opening, and wherein the control system (12) is further configured, in the case when subsequently, after dispensing the held animal feed, the control system (12) gives the "empty" indicator on the basis of the signal received from the sensor (13), to switch the first and second relay group (15, 16) from star to delta so that the three-phase motor (7) is connected to the frequency controller (11) in delta configuration, in particular in order to increase the maximum motor speed with which the torque for rotating the auger can be delivered.

3. Vehicle according to Claim 1 or 2, wherein the control system (12) is configured, in the case when the control system (12) does not give the "empty" indicator on the basis of the signal received from the sensor (13), to switch the first and second relay group (15, 16) so that the three-phase motor (7) is connected to the frequency controller (11) in star configuration.

4. Vehicle according to one or more of the preceding claims, wherein the auger drive is configured to rotate the auger (5) by means of the three-phase motor (7) which is connected to the frequency controller (11) in star configuration when chopping and/or mixing at a maximum auger speed of RPMₘₐₓ, and wherein the auger drive is configured to increase the maximum auger speed to at least 2RPMₘₐₓ when the three-phase motor (7) is connected to the frequency controller (11) in delta configuration.

5. Vehicle according to one or more of the preceding claims, wherein the frame (2) is provided with an undercarriage with wheels, and wherein the vehicle (1) is provided with navigation means that are connected to the control system (12) in order to autonomously drive the vehicle (1) over a surface, such as a floor in an animal shed or yard of a farm.

6. Vehicle according to one or more of the preceding claims, wherein the displacement means comprise a rail system, on which rail system the frame (2) is arranged, and along which rail system the frame (2) is movably arranged.

7. Vehicle according to one or more of the preceding claims, wherein the sensor comprises a weighing sensor (13), which is configured to determine a weight of animal feed held in the container (3).

8. Vehicle according to Claim 7, wherein the control system (12) is configured to determine a variable that is representative of the decrease in the weight of animal feed held in the container (3), in particular when dispensing same from the container (3), and to give the "empty" indicator in the case when the control system (12) determines, on the basis of said variable, that said decrease in the weight is substantially not or hardly changing with time, in particular has become equal to or fallen below a threshold value, in particular over a predetermined period.

9. Vehicle according to one or more of the preceding claims, wherein the three-phase motor (7) comprises an output shaft, and wherein the auger drive comprises a transmission device (8) with a fixed transmission ratio, with an input shaft that is connected to the output shaft of the three-phase motor (7), and with an output shaft that is connected to the auger (5).

10. Vehicle according to one or more of the preceding claims, wherein the control system (12) is configured to disconnect the battery power supply (10) from the three-phase motor (7) when the three-phase motor (7) is connected, in particular via the frequency controller (11), to the three-phase power supply network.

11. Feeding system for automatically feeding animals, in particular cows, such as dairy cows or beef cows, with animal feed at at least one feeding place, wherein the feeding system comprises an autonomous vehicle (1) according to one or more of the preceding claims.

12. Feeding system according to Claim 11, wherein the feeding system is provided with a charging device (19) that is configured to be connected to a three-phase power supply network (400 V), wherein the vehicle (1) is provided with a connecting device (20) that is configured to be connected to the charging device (19) in order to charge the battery power supply (10) of the vehicle (1) and in order to supply, in particular via the frequency controller (11), the three-phase motor (7) with power when mixing and/or chopping held animal feed.

13. Feeding system according to Claim 11 or 12, wherein the feeding system is provided with a feeding fence, in particular in an animal shed space for holding animals, and a feeding alley that extends along the feeding fence, in particular on the side of the feeding fence opposite the animal shed space, and wherein the vehicle (1) is configured to autonomously drive through the feeding alley and to dispense animal feed along the feeding fence.

14. Method for automatically feeding animals, in particular cows, such as dairy cows or beef cows, by means of a vehicle (1) according to one or more of claims 1 to 10.

## Patentansprüche

1. Autonomes Fahrzeug (1) zur Verwendung zum Füttern von Tieren, insbesondere Kühen, wie etwa Milchkühen oder Rindfleischkühen, wobei das Fahrzeug Folgendes umfasst:
- einen Rahmen (2), insbesondere einen Unterwagen,
- Verschiebemittel zum Bewegen des Rahmens (2),
- einen Behälter (3), der zum Enthalten von Tierfutter am Rahmen angeordnet ist und zum Ausgeben des enthaltenen Tierfutters aus dem Behälter (3) eine Ausgabeöffnung umfasst,
- eine drehbare Schnecke (5), die zum Mischen und/oder Hacken des enthaltenen Tierfutters im Behälter angeordnet ist,
- einen Schneckenantrieb zum Drehen der Schnecke (5) mit einem Dreiphasenmotor (7) und mit einer Frequenzsteuerung (11) zum Steuern des Dreiphasenmotors (7), insbesondere zum Einstellen einer Motordrehzahl des Dreiphasenmotors (7), wobei der Dreiphasenmotor (7) mit einem Dreiphasenstromversorgungsnetzwerk (400 V), insbesondere via die Frequenzsteuerung (11), verbindbar ist,
- eine Batteriestromversorgung (10) für den Dreiphasenmotor (7), die dazu ausgelegt ist, mittels des Dreiphasenstromversorgungsnetzwerks geladen zu werden,
- einen Sensor (13), der dazu ausgelegt ist, ein Signal zu bestimmen, das die Menge von Tierfutter im Behälter (3) betrifft, und
- ein Steuersystem (12) zum Steuern der Frequenzsteuerung (11), wobei das Steuersystem (12) mit dem Sensor (13) verbunden ist, um das Signal vom Sensor (13) zu empfangen,
**dadurch gekennzeichnet, dass** der Dreiphasenmotor (7) via eine erste Relaisgruppe (15) mit der Frequenzsteuerung (11) verbunden ist, um in Sternauslegung verbindbar zu sein, und via eine zweite Relaisgruppe (16) mit der Frequenzsteuerung (11) verbunden ist, um in Dreieckauslegung verbindbar zu sein, und das Steuersystem (12) dazu ausgelegt ist, die erste und die zweite Relaisgruppe (15, 16) umzuschalten, derart, dass der Dreiphasenmotor (7) mit der Frequenzsteuerung (11) in Sternauslegung verbunden ist, wenn der Dreiphasenmotor (7) insbesondere via die Frequenzsteuerung (11) mit dem Dreiphasenstromversorgungsnetzwerk verbunden ist, um enthaltenes Tierfutter zu mischen und/oder zu hacken, und ferner dazu ausgelegt ist, in dem Fall, in dem der Dreiphasenmotor (7) von der Batteriestromversorgung (10) mit Strom versorgt wird, ohne mit dem Dreiphasenstromversorgungsnetzwerk verbunden zu sein, und das Steuersystem (12) eine "Leer"-Anzeige auf Basis des vom Sensor (13) empfangenen Signals ausgibt, die erste und die zweite Relaisgruppe (15, 16) umzuschalten, derart, dass der Dreiphasenmotor (7) in Dreieckauslegung mit der Frequenzsteuerung (11) verbunden ist, insbesondere um die maximale Motordrehzahl, mit der das Drehmoment zum Drehen der Schnecke geliefert werden kann, zu erhöhen.

2. Fahrzeug nach Anspruch 1, wobei das Steuersystem (12) dazu ausgelegt ist, in dem Fall, in dem der Dreiphasenmotor (7) vom Dreiphasenstromversorgungsnetzwerk getrennt ist, nachdem enthaltenes Tierfutter gemischt und/oder gehackt wurde, den Dreiphasenmotor (7) vorübergehend auszuschalten, und das Steuersystem (12) ferner dazu ausgelegt ist, zu einem späteren Zeitpunkt, wenn sich Tierfutter im Behälter (3) befindet, das Dreiphasenmotor(7) wieder zu starten, während der Dreiphasenmotor (7) mit der Frequenzsteuerung (11) in Sternauslegung verbunden ist, um im Behälter (3) enthaltenes Tierfutter via die Ausgabeöffnung auszugeben, und wobei das Steuersystem (12) ferner dazu ausgelegt ist, in dem Fall, in dem nach Ausgeben des enthaltenen Tierfutters das Steuersystem (12) nachfolgend die "Leer"-Anzeige auf Basis des vom Sensor (13) empfangenen Signals gibt, die erste und die zweite Relaisgruppe (15, 16) von Stern in Dreieck umzuschalten, derart, dass der Dreiphasenmotor (7) mit der Frequenzsteuerung (11) in Dreieckauslegung verbunden ist, insbesondere um die maximale Motordrehzahl, mit der das Drehmoment zum Drehen der Schnecke geliefert werden kann, zu erhöhen.

3. Fahrzeug nach Anspruch 1 oder 2, wobei in dem Fall, in dem das Steuersystem (12) die "Leer"-Anzeige auf Basis des vom Sensor (13) empfangenen Signals nicht gibt, das Steuersystem (12) dazu ausgelegt ist, die erste und die zweite Relaisgruppe (15, 16) umzuschalten, derart, dass der Dreiphasenmotor (7) in Sternauslegung mit der Frequenzsteuerung (11) verbunden ist.

4. Fahrzeug nach einem oder mehreren der vorhergehenden Ansprüche, wobei der Schneckenantrieb dazu ausgelegt ist, die Schnecke (5) mittels des Dreiphasenmotors (7), der mit der Frequenzsteuerung (11) in Sternauslegung verbunden ist, zu drehen, wenn mit einer maximalen Schneckendrehzahl von RPMₘₐₓ gehackt und/oder gemischt wird, und wobei der Schneckenantrieb dazu ausgelegt ist, die maximale Schneckendrehzahl auf mindestens 2 RPMₘₐₓ zu erhöhen, wenn der Dreiphasenmotor (7) mit der Frequenzsteuerung (11) in Dreieckauslegung verbunden ist.

5. Fahrzeug nach einem oder mehreren der vorhergehenden Ansprüche, wobei der Rahmen (2) mit einem Unterwagen mit Rädern versehen ist und wobei das Fahrzeug (1) mit Navigationsmitteln versehen ist, die mit dem Steuersystem (12) verbunden sind, um das Fahrzeug (1) autonom über eine Fläche zu fahren, wie etwa einen Boden in einem Tierstall oder einen Hof einer Farm.

6. Fahrzeug nach einem oder mehreren der vorhergehenden Ansprüche, wobei die Verschiebemittel ein Schienensystem umfassen, wobei der Rahmen (2) auf dem Schienensystem angeordnet ist und wobei der Rahmen (2) entlang des Schienensystems bewegbar angeordnet ist.

7. Fahrzeug nach einem oder mehreren der vorhergehenden Ansprüche, wobei der Sensor einen Wägesensor (13) umfasst, der dazu ausgelegt ist, ein Gewicht von im Behälter (3) enthaltenem Tierfutter zu bestimmen.

8. Fahrzeug nach Anspruch 7, wobei das Steuersystem (12) dazu ausgelegt ist, eine Variable zu bestimmen, die für die Verringerung des Gewichts von im Behälter (3) enthaltenem Tierfutter repräsentativ ist, insbesondere beim Ausgeben desselben aus dem Behälter (3), und die "Leer"-Anzeige in dem Fall zu geben, in dem das Steuersystem (12) auf Basis der Variable bestimmt, dass sich die Verringerung des Gewichts über die Zeit im Wesentlichen nicht oder kaum ändert, insbesondere gleich einem Schwellwert geworden ist oder unter denselben abgefallen ist, insbesondere über eine vorbestimmte Periode.

9. Fahrzeug nach einem oder mehreren der vorhergehenden Ansprüche, wobei der Dreiphasenmotor (7) eine Abtriebswelle umfasst und wobei der Schneckenantrieb eine Getriebevorrichtung (8) mit einem festen Übersetzungsverhältnis umfasst, mit einer Antriebswelle, die mit der Abtriebswelle des Dreiphasenmotors (7) verbunden ist, und mit einer Abtriebswelle, die mit der Schnecke (5) verbunden ist.

10. Fahrzeug nach einem oder mehreren der vorhergehenden Ansprüche, wobei das Steuersystem (12) dazu ausgelegt ist, die Batteriestromversorgung (10) vom Dreiphasenmotor (7) zu trennen, wenn der Dreiphasenmotor (7), insbesondere via die Frequenzsteuerung (11), mit dem Dreiphasenstromversorgungsnetzwerk verbunden ist.

11. Fütterungssystem zum automatischen Füttern von Tieren, insbesondere Kühen, wie etwa Milchkühen oder Rindfleischkühen, mit Tierfutter an mindestens einem Fütterungsort, wobei das Fütterungssystem ein autonomes Fahrzeug (1) nach einem oder mehreren der vorhergehenden Ansprüche umfasst.

12. Fütterungssystem nach Anspruch 11, wobei das Fütterungssystem mit einer Ladevorrichtung (19) versehen ist, die dazu ausgelegt ist, mit einem Dreiphasenstromversorgungsnetzwerk (400 V) verbunden zu sein, wobei das Fahrzeug (1) mit einer Verbindungsvorrichtung (20) versehen ist, die dazu ausgelegt ist, mit der Ladevorrichtung (19) verbunden zu sein, um die Batteriestromversorgung (10) des Fahrzeugs (1) zu laden und um den Dreiphasenmotor (7), insbesondere via die Frequenzsteuerung (11), mit Strom zu versorgen, wenn enthaltenes Tierfutter gemischt und/oder gehackt wird.

13. Fütterungssystem nach Anspruch 11 oder 12, wobei das Fütterungssystem mit einem Fütterungszaun, insbesondere in einen Tierstall zum Enthalten von Tieren, und einem Fütterungsgang, der sich entlang des Fütterungszauns erstreckt, insbesondere auf der Seite des Fütterungszauns gegenüber dem Tierstallraum, versehen ist und wobei das Fahrzeug (1) dazu ausgelegt ist, autonom durch den Fütterungsgang zu fahren und Tierfutter entlang des Fütterungszauns auszugeben.

14. Verfahren zum automatischen Füttern von Tieren, insbesondere Kühen, wie etwa Milchkühen oder Rindfleischkühen, mittels eines Fahrzeugs (1) nach einem oder mehreren der Ansprüche 1 bis 10.

## Revendications

1. Véhicule autonome (1) destiné à être utilisé dans le cadre de l'alimentation d'animaux, en particulier des vaches, comme des vaches laitières ou des vaches à viande, le véhicule comprenant :
- un châssis (2), en particulier un train de roulement,
- des moyens de déplacement pour déplacer le châssis (2),
- un conteneur (3) placé sur le châssis pour contenir des aliments pour animaux et doté d'une ouverture de distribution pour distribuer depuis le conteneur (3) les aliments pour animaux contenus dans celui-ci,
- une vis sans fin rotative (5) disposée dans le conteneur pour mélanger et/ou hacher les aliments pour animaux contenus,
- un entraînement de vis sans fin pour faire tourner la vis sans fin (5), avec un moteur triphasé (7) et avec un dispositif de commande de fréquence (11) pour commander le moteur triphasé (7), en particulier pour régler une vitesse de moteur du moteur triphasé (7), le moteur triphasé (7) pouvant être connecté, en particulier par l'intermédiaire du dispositif de commande de fréquence (11), à un réseau d'alimentation électrique triphasé (400 V),
- une batterie d'alimentation (10) pour le moteur triphasé (7), qui est configurée pour être rechargée au moyen du réseau d'alimentation triphasé,
- un capteur (13), configuré pour déterminer un signal lié à la quantité d'aliments pour animaux dans le conteneur (3), et
- un système de commande (12) pour commander le dispositif de commande de fréquence (11), le système de commande (12) étant connecté au capteur (13) afin de recevoir le signal en provenance du capteur (13),
**caractérisé en ce que** le moteur triphasé (7) est connecté au dispositif de commande de fréquence (11) par l'intermédiaire d'un premier groupe de relais (15) de manière à pouvoir être connecté en configuration étoile, et est connecté au dispositif de commande de fréquence (11) par l'intermédiaire d'un second groupe de relais (16) de manière à pouvoir être connecté en configuration triangle, et **en ce que** le système de commande (12) est configuré pour commuter les premier et second groupes de relais (15, 16) de telle sorte que le moteur triphasé (7) soit connecté au dispositif de commande de fréquence (11) en configuration étoile lorsque le moteur triphasé (7) est connecté, en particulier par l'intermédiaire du dispositif de commande de fréquence (11), au réseau d'alimentation triphasé afin de mélanger et/ou hacher les aliments pour animaux contenus, et est en outre configuré, dans le cas où le moteur triphasé (7) est alimenté en puissance par la batterie d'alimentation (10) sans être connecté au réseau d'alimentation triphasé et que le système de commande (12) donne une indication « vide » sur la base du signal reçu en provenance du capteur (13), pour commuter les premier et second groupes de relais (15, 16) de telle sorte que le moteur triphasé (7) soit connecté au dispositif de commande de fréquence (11) en configuration triangle, en particulier pour augmenter la vitesse maximale du moteur avec laquelle le couple de rotation de la vis sans fin peut être délivré.

2. Véhicule selon la revendication 1, dans lequel le système de commande (12) est configuré, dans le cas où le moteur triphasé (7) est déconnecté du réseau d'alimentation triphasé après avoir mélangé et/ou haché les aliments pour animaux contenus, pour mettre temporairement hors tension le moteur triphasé (7), et le système de commande (12) est en outre configuré, à un moment ultérieur, avec des aliments pour animaux contenus dans le conteneur (3), pour redémarrer le moteur triphasé (7) tandis que le moteur triphasé (7) est connecté au dispositif de commande de fréquence (11) en configuration étoile afin de distribuer les aliments pour animaux contenus depuis le conteneur (3) par l'ouverture de distribution, et dans lequel le système de commande (12) est en outre configuré, dans le cas où, par la suite, après la distribution des aliments pour animaux contenus, le système de commande (12) donne l'indication « vide » sur la base du signal reçu en provenance du capteur (13), pour commuter les premier et second groupes de relais (15, 16) d'étoile à triangle de telle sorte que le moteur triphasé (7) soit connecté au dispositif de commande de fréquence (11) en configuration triangle, en particulier pour augmenter la vitesse maximale du moteur avec laquelle le couple de rotation de la vis sans fin peut être délivré.

3. Véhicule selon la revendication 1 ou 2, dans lequel le système de commande (12) est configuré, dans le cas où le système de commande (12) ne donne pas l'indication « vide » sur la base du signal reçu en provenance du capteur (13), pour commuter les premier et second groupes de relais (15, 16) de telle sorte que le moteur triphasé (7) soit connecté au dispositif de commande de fréquence (11) en configuration étoile.

4. Véhicule selon une ou plusieurs des revendications précédentes, dans lequel l'entraînement de vis sans fin est configuré pour faire tourner la vis sans fin (5) au moyen du moteur triphasé (7) qui est connecté au dispositif de commande de fréquence (11) en configuration étoile lors du hachage et/ou du mélange à une vitesse maximale de vis sans fin de RPMₘₐₓ, et dans lequel l'entraînement de vis sans fin est configuré pour augmenter la vitesse maximale de vis sans fin à au moins 2RPMₘₐₓ lorsque le moteur triphasé (7) est connecté au dispositif de commande de fréquence (11) en configuration triangle.

5. Véhicule selon une ou plusieurs des revendications précédentes, dans lequel le châssis (2) est muni d'un train de roulement à roues, le véhicule (1) étant muni de moyens de navigation qui sont connectés au système de commande (12) afin de faire circuler le véhicule (1) de manière autonome sur une surface, comme un sol d'une étable ou d'une cour d'une exploitation agricole.

6. Véhicule selon une ou plusieurs des revendications précédentes, dans lequel les moyens de déplacement comprennent un système de rails, le châssis (2) étant agencé sur ledit système de rail et le châssis (2) étant agencé mobile le long dudit système de rail.

7. Véhicule selon une ou plusieurs des revendications précédentes, dans lequel le capteur comprend un capteur de pesage (13) qui est configuré pour déterminer le poids d'aliments pour animaux contenus dans le conteneur (3).

8. Véhicule selon la revendication 7, dans lequel le système de commande (12) est configuré pour déterminer une variable qui est représentative de la diminution du poids des aliments pour animaux contenus dans le conteneur (3), en particulier lors de leur distribution à partir du conteneur (3), et pour donner l'indication « vide » dans le cas où le système de commande (12) détermine, sur la base de ladite variable, que ladite diminution du poids ne varie pratiquement pas ou que très peu avec le temps, en particulier qu'elle est devenue inférieure ou égale à une valeur seuil, en particulier au cours d'une période prédéterminée.

9. Véhicule selon une ou plusieurs des revendications précédentes, dans lequel le moteur triphasé (7) comprend un arbre de sortie, et dans lequel l'entraînement de vis sans fin comprend un dispositif de transmission (8) avec un rapport de transmission fixe, avec un arbre d'entrée qui est relié à l'arbre de sortie du moteur triphasé (7) et avec un arbre de sortie qui est relié à la vis sans fin (5).

10. Véhicule selon une ou plusieurs des revendications précédentes, dans lequel le système de commande (12) est configuré pour déconnecter la batterie d'alimentation (10) du moteur triphasé (7) lorsque le moteur triphasé (7) est connecté, en particulier par l'intermédiaire du dispositif de commande de fréquence (11), au réseau d'alimentation triphasé.

11. Système d'alimentation permettant d'alimenter automatiquement des animaux, en particulier des vaches, comme des vaches laitières ou des vaches à viande, avec des aliments pour animaux au niveau d'au moins un point d'alimentation, le système d'alimentation comprenant un véhicule autonome (1) selon une ou plusieurs des revendications précédentes.

12. Système d'alimentation selon la revendication 11, le système d'alimentation étant muni d'un dispositif de recharge (19) qui est configuré pour être connecté à un réseau d'alimentation triphasé (400 V), le véhicule (1) étant muni d'un dispositif de connexion (20) qui est configuré pour être connecté au dispositif de recharge (19) afin de recharger la batterie d'alimentation (10) du véhicule (1) et d'alimenter, en particulier par l'intermédiaire du dispositif de commande de fréquence (11), le moteur triphasé (7) en énergie lors du mélange et/ou du hachage d'aliments pour animaux contenus.

13. Système d'alimentation selon la revendication 11 ou 12, le système d'alimentation étant muni d'une clôture d'alimentation, en particulier dans un espace de stabulation pour animaux permettant de garder des animaux, et d'un couloir d'alimentation qui s'étend le long de la clôture d'alimentation, en particulier sur le côté de la clôture d'alimentation opposé à l'espace de stabulation pour animaux, et le véhicule (1) étant configuré pour circuler de manière autonome dans le couloir d'alimentation et pour distribuer de la nourriture pour animaux le long de la clôture d'alimentation.

14. Procédé d'alimentation automatique d'animaux, en particulier des vaches, comme des vaches laitières ou des vaches à viande, au moyen d'un véhicule (1) selon une ou plusieurs des revendications 1 à 10.
